# EUROPEAN PATENT APPLICATION

(11) **EP 4 415 123 A1**
(43) Date of publication of application: **14.08.2024**
(21) Application number: 23824189.7
(22) Date of filing: 13.06.2023
(51) Int. Cl.: H01M 50/145, H01M 50/124, H01M 50/119, H01M 50/141, H01M 50/121, H01M 50/24, H01M 10/6567, H01M 10/613, H01M 10/6556, H01M 50/253

(54) **BATTERY CELL, METHOD FOR MANUFACTURING SAME, AND DIRECT LIQUID COOLING BATTERY MODULE COMPRISING SAME**

(30) Priority: 14.06.2022 KR 20220072013
(71) Applicant: LG Energy Solution, Ltd., Seoul 07335 (KR)
(72) Inventor: JUNG, Min Yong, Daejeon 34122 (KR); CHOI, Bum, Daejeon 34122 (KR); KEUM, Jong Yoon, Daejeon 34122 (KR)
(74) Representative: Plasseraud IP
(86) International application number: PCT/KR2023/008070
(87) International publication number: WO 2023/243973

(57) **Abstract**

A battery cell manufacturing method according to one example of the present invention comprises steps of scratching, in a unit plate material having a plating layer, a partial region of the plating layer to form a scratch region on the unit plate material, bonding a sacrificial metal sheet to one side of the unit plate material to cover the scratch region, and processing the unit plate material into a cylindrical shape so that the sacrificial metal sheet is exposed to the outside.

## Description

### Technical Field

The present invention relates to a battery cell, a manufacturing method thereof, and a direct water-cooling battery module comprising the same, and relates, in detail, to a battery cell capable of improving corrosion resistance of the battery cell by using a sacrificial metal having a higher metal ionization tendency than that of a battery cell case, a manufacturing method thereof, and a direct water-cooling battery module comprising the same.

This application claims the benefit of priority based on Korean Patent Application No. 10-2022-0072013 dated June 14, 2022, the disclosure of which is incorporated herein by reference in its entirety.

### Background Art

Batteries used in eco-friendly vehicles generate a large amount of heat because high power is required, and in order to improve battery performance and lifespan, it is very important to efficiently discharge heat generated from the battery, thereby preventing the batteries from overheating.

Conventionally, as a cooling system for dissipating heat from a battery, a direct air-cooling method, an indirect water-cooling method, or a direct water-cooling method is known.

The direct water-cooling method is a method in which battery cells are directly immersed in cooling water, and heat from the battery cells is directly discharged into the cooling water.

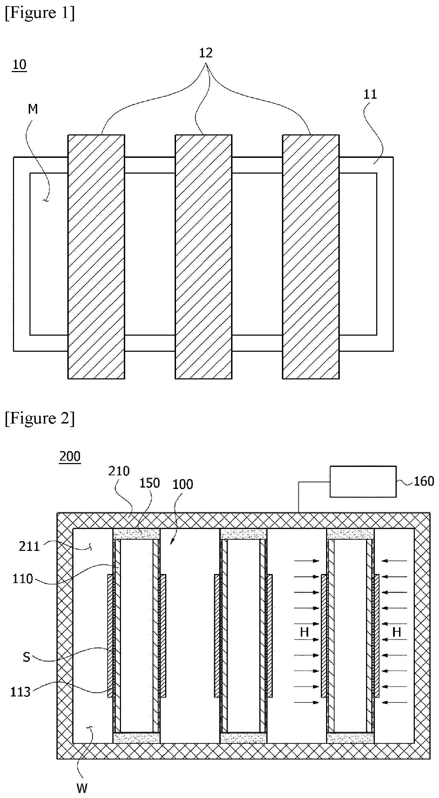

Figure 1 is a schematic configuration diagram of a conventional battery module (10).

Referring to Figure 1, a direct water-cooling type battery module (10) consists of a cell frame (11) and a plurality of battery cells (12). The plurality of battery cells (12) is spaced apart from each other in the cell frame (11). The cell frame (11) is provided so that cooling water can flow.

Generally, in the battery cell (12), an exterior case accommodating internal electrodes is made of nickel-plated iron. Accordingly, when the battery cell (12) is directly impregnated with cooling water, it is vulnerable to corrosion due to the material characteristics of the exterior case. In addition, there is a problem that the exterior case is polar, and has vulnerable electrical insulation.

In order to prevent corrosion of the battery cell (12) in the battery module (10) of the conventional direct water-cooling method, insulating oil or special cooling water (M) (e.g., 3M's NOVEC) is used.

However, the insulating oil has a problem of being vulnerable to fire, and the special cooling water such as 3M's NOVEC is excellent as a coolant for battery cells in that it is nonpolar and has corrosion resistance, but it is expensive, whereby there is a problem of increasing the manufacturing cost of the battery module.

Also, when an antirust liquid is applied to the exterior case of the battery cell (12) in order to prevent corrosion of the battery cell (12) as in the conventional art, a post-treatment process of covering the exterior case of the battery cell (12) using a non-woven fabric is required to maintain the antirust liquid.

In addition, even if the antirust liquid is applied to the exterior case of the battery cell (12), the antirust agent flows down from the exterior case of the battery cell due to surface tension, whereby there is a problem that the antirust agent is not evenly applied to the exterior case.

### Disclosure

### Technical Problem

The present invention is intended to provide a battery cell capable of improving corrosion resistance of a battery cell by using a sacrificial metal having a higher metal ionization tendency than that of a battery cell case, a manufacturing method thereof, and a direct water-cooling battery module comprising the same.

### Technical Solution

A battery cell manufacturing method according to one example of the present invention comprises steps of scratching, in a unit plate material having a plating layer, a partial region of the plating layer to form a scratch region on the unit plate material, bonding a sacrificial metal sheet to one side of the unit plate material to cover the scratch region, and processing the unit plate material into a cylindrical shape so that the sacrificial metal sheet is exposed to the outside.

Also, the scratch region may comprise a plurality of non-plated portions that a partial region of the plating layer is removed from the unit plate material and a plated portion in which the plating layer remains between two adjacent non-plated portions.

In addition, the sacrificial metal sheet may be bonded to the unit plate material by being pressure-welded with the plated portion within the scratch region and the plating layer outside the scratch region.

Furthermore, the sacrificial metal sheet may be pressure-welded to the unit plate material in a state of surface contact therewith.

Also, the sacrificial metal sheet may be pressure-welded to the unit plate material by a hot pressure welding method.

In addition, the sacrificial metal sheet may be pressure-welded to the unit plate material by a gas pressure welding method.

Furthermore, the sacrificial metal sheet may be pressure-welded to the unit plate material by a cold pressure welding method.

Also, the scratch region may be provided as the plating layer is subjected to scratch treatment by a laser.

In addition, the scratch region may be provided as the plating layer is subjected to etching treatment.

Furthermore, the sacrificial metal sheet may be formed of a metal material having a higher metal ionization tendency than that of the unit plate material.

Also, the sacrificial metal sheet may be formed of one or more selected from the group consisting of aluminum, magnesium, zinc, an aluminum alloy, a magnesium alloy, and a zinc alloy.

In addition, a battery cell according to one example of the present invention comprises an electrode assembly, a case accommodating the electrode assembly, a plating layer formed on an outer surface of the case, a scratch region formed by removing a partial region of the plating layer; and a sacrificial metal sheet provided to surround the scratch region and formed of a material having a higher metal ionization tendency than that of the plating layer, wherein the scratch region comprises a plurality of non-plated portions that a partial region of the plating layer is removed and a plated portion in which the plating layer remains between two adjacent non-plated portions.

Furthermore, the sacrificial metal sheet may be bonded to the outer surface of the case by being pressure-welded with the plated portion within the scratch region and the plating layer outside the scratch region.

Also, the plating layer may be a nickel-plating layer, and the sacrificial metal sheet may be formed of one or more selected from the group consisting of aluminum, magnesium, zinc, an aluminum alloy, a magnesium alloy, and a zinc alloy.

In addition, the battery module related to one example of the present invention comprises the plurality of battery cells, a cell frame provided so that the plurality of battery cells is disposed apart from each other, and cooling water allows to flow between the plurality of battery cells, and a cooling water supply part for supplying cooling water into the cell frame, wherein the cooling water supply part is provided to supply cooling water without insulating treatment.

### Advantageous Effects

As described above, a battery cell related to at least one example of the present invention, a manufacturing method thereof, and a direct water-cooling battery module comprising the same have the following effects.

A case-type plate material can be manufactured by press-welding a sacrificial metal sheet to a plate material provided with a scratch region, and then a battery cell can be manufactured by processing the case-type plate material into a cylindrical shape and then accommodating an electrode assembly therein. Accordingly, the manufacturing process of the battery cell case can be simplified, and the product defect rate can be reduced through the simplification of the manufacturing process.

Also, it is possible to smoothly move electrons between the case and the sacrificial metal sheet through the scratch region provided in the plating layer on the case, and accordingly, the stability of the electrical connection between the sacrificial metal sheet and the case can be promoted.

In addition, in manufacturing the case of the battery cell, the sacrificial metal sheet is surface-bonded to the plate material by a pressure welding method, and accordingly the bonding force between the sacrificial metal sheet and the plate material can be improved.

Furthermore, as the sacrificial metal sheet is provided on the outer surface of the case of the battery cell, even if the battery cell is immersed in general cooling water for a long time, corrosion of the battery cell can be prevented.

### Description of Drawings

Figure 1 is a schematic configuration diagram of a conventional battery module.
Figure 2 schematically illustrates a configuration diagram of a direct water-cooling battery module according to one example of the present invention.
Figure 3 schematically illustrates a cross-sectional diagram of a battery cell according to one example of the present invention.
Figures 4 to 6 are diagrams for explaining a manufacturing method of a battery cell according to a first example of the present invention.
Figures 7 to 10 are diagrams for explaining a manufacturing process of a case in a manufacturing method of a battery cell according to a second example of the present invention.

### Mode for Invention

Hereinafter, a direct water-cooling battery cell (hereinafter, also referred to as a `battery cell') according to one example of the present invention, a manufacturing method thereof, and a direct water-cooling battery module (hereinafter, also referred to as a `battery module') comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

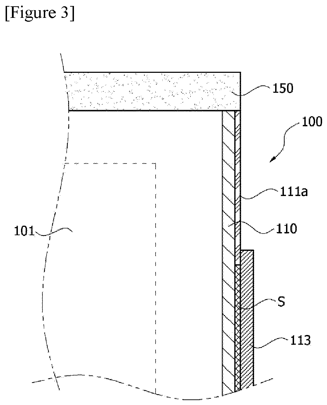

Figure 2 schematically illustrates a configuration diagram of a direct water-cooling battery module according to one example of the present invention, and Figure 3 schematically illustrates a cross-sectional diagram of a battery cell according to one example of the present invention.

Referring to Figure 2, the battery module (200) according to one example of the present invention comprises a plurality of battery cells (100), a cell frame (210) accommodating the plurality of battery cells (100), and a cooling water supply part (160).

Specifically, the battery module (200) comprises a plurality of battery cells (100), a cell frame (210) provided so that the plurality of battery cells (100) is disposed apart from each other, and cooling water (W) allows to flow between the plurality of battery cells (100), and a cooling water supply part (160) for supplying cooling water (W) into the cell frame (210).

Referring to Figure 2, the cell frame (210) has a predetermined space part (211) therein, and is provided in a structure in which cooling water (W) can flow within the space part (211). The cooling water (W) may be supplied to the inner space part (211) of the cell frame (210), and then discharged to the outside of the cell frame (210). To this end, the battery module (200) may comprise a cooling water discharge part for discharging the cooling water (W) to the outside of the cell frame (210). In addition, the cooling water supply part (160) may comprise a cooling water storage tank and a pump. In addition, the cooling water supply part (160) may be provided to supply cooling water (W) that is not insulated. The general cooling water (W) may be cooling water generally used in vehicles.

Referring to Figure 3, the battery cell (100) according to one example of the present invention comprises an electrode assembly (101), a case (110), a plating layer (111a), a scratch region (S) provided on the plating layer (111a), and a sacrificial metal sheet (113) surrounding the scratch region (S).

In addition, the battery cell (100) may comprise a cell sheet including a polymer film and provided to surround the sacrificial metal sheet (113).

The battery cell (100) comprises an electrode assembly (101), a case (110) accommodating the electrode assembly (101), a plating layer (111a) formed on an outer surface of the case (110), a scratch region (S) formed by removing a partial region of the plating layer (111a), and a sacrificial metal sheet (113) provided to surround the scratch region (S) and formed of a material having a higher metal ionization tendency than that of the plating layer (111a).

Referring to Figure 2, when the direct water-cooling battery cell (100) is immersed in the cooling water (W), the moisture (H) may be transferred to the sacrificial metal sheet (113). At this time, since the metal ionization reaction to moisture (H) in the sacrificial metal sheet (113) is greater than the metal ionization reaction to moisture in the case (110), the corrosion resistance of the case (110) can be improved.

Referring to Figure 2, when the battery module (200) uses general cooling water (W) for cooling of the battery cell (100), the moisture (H) penetrates through the corroded portion on the surface of the battery cell (100), so that the power of the battery cell (100) is energized with the general cooling water (W), whereby there may be a problem that the battery module (200) is damaged.

Referring to Figure 2, when the direct water-cooling battery cell (100) is immersed in the cooling water (W), the moisture (H) of the cooling water (W) is subjected to ionization reaction with the sacrificial metal sheet (113) due to the difference in metal ionization reaction between the case (110) and the sacrificial metal sheet (113), and as a result, the metal ionization reaction of the case (110) is suppressed, whereby the direct water-cooling battery cell (100) can prevent corrosion of the case (110).

The electrode assembly (101) is accommodated in the case (110), and comprises a positive electrode, a negative electrode, and a separator disposed between the positive electrode and the negative electrode. The electrode and the separator may constitute an integrated electrode assembly (101). For example, the electrode assembly (101) may be a jelly-roll type electrode assembly in which sheet-type positive and negative electrodes are wound in a state where a separator is interposed therebetween, a stack type electrode assembly in which pluralities of positive and negative electrodes are sequentially stacked in a state where a separator is interposed therebetween, or a stack/folding type electrode assembly in which unit cells obtained by stacking positive and negative electrodes in predetermined units in a state where a separator is interposed therebetween are sequentially wound in a state where they are positioned on a separation film.

In addition, the case (110) serves to accommodate the electrode assembly (101), and to protect the battery cell (100) from external impacts. The case (110) may be cylindrical, pouch, or angular, and for example, the case (110) may be cylindrical. In particular, the electrode assembly (101) may be a rolled jelly-roll type electrode assembly, the case (110) may be a cylindrical case, and the direct water-cooling battery cell (100) may be a cylindrical battery cell.

Also, the case (110) may be formed of a metal material, and the case (110) may be formed of one or more selected from the group consisting of steel or stainless steel.

In addition, the surface of the case (110) may be nickel (Ni)-plated. That is, the plating layer (111a) may comprise a nickel-plating layer.

Meanwhile, the nickel-plating layer has little discoloration, excellent rust resistance force, and excellent corrosion resistance and wear resistance. However, due to material characteristics, the nickel-plating layer may be corroded when immersed in cooling water, and as the corrosion progresses, polarity is generated and simultaneously insulation properties are deteriorated.

Meanwhile, when the sacrificial metal sheet (113) is provided on the plating layer (111a), the plating layer (111a) may be a factor that hinders the movement of electrons between the sacrificial metal sheet (113) and the case (110).

The scratch region (S) is formed on the plating layer (111a), and then the sacrificial metal sheet (113) is coupled to the scratch region (S), whereby electron movement between the sacrificial metal sheet (113) and the case (110) can be made smoothly.

Also, the scratch part (S) may also be formed by removing a partial region of the plating layer (111a) along the thickness direction of the plating layer (111a), and the scratch part (S) may be formed up to a partial region of the plating layer (111a) along the thickness direction of the plating layer (111a), and an outer surface of the case facing the partial region.

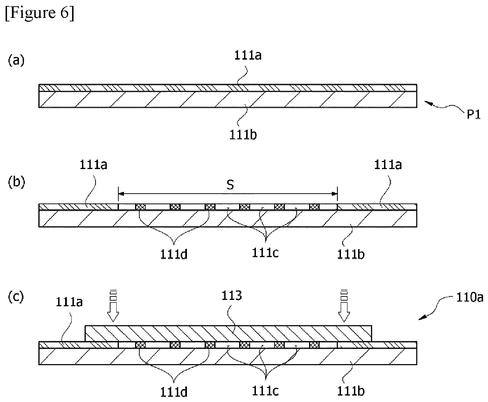

In addition, the scratch region (S) comprises a plurality of non-plated portions (111c, see Figure 6) that a partial region of the plating layer (111a) is removed and a plated portion (111d) in which the plating layer remains between two adjacent non-plated portions (111c).

Furthermore, the scratch region (S) may be provided as the plating layer (111a) is subjected to scratch treatment by a laser.

Also, the scratch region (S) may be provided as the plating layer (111a) is subjected to etching treatment.

In addition, the sacrificial metal sheet (113) may be bonded to the outer surface of the case (110) by being pressure-welded with the plated portion (111d) within the scratch region (S) and the plating layer (111a) outside the scratch region (S).

Furthermore, the sacrificial metal sheet (113) may be pressure-welded to the case (110) in a state of surface contact therewith.

As one example, the sacrificial metal sheet (113) may be pressure-welded to the case by a hot pressure welding method. Alternatively, the sacrificial metal sheet (113) may be pressure-welded to the unit plate material by a gas pressure welding method. Alternatively, the sacrificial metal sheet (113) may be pressure-welded to the case (110) by a cold pressure welding method.

The sacrificial metal sheet (113) may be formed of one or more selected from the group consisting of aluminum, magnesium, zinc, an aluminum alloy, a magnesium alloy, and a zinc alloy.

Referring to Figure 2, the battery module (200) may comprise a waterproof layer (150) provided inside the cell frame (210), and provided to cover the upper end and the lower end of the case (110) of the battery cell (100), respectively.

The waterproof layer (150) performs a function of preventing moisture from permeating into the case (110) and fixing the battery cell (100) to the cell frame (210).

An upper waterproof layer may be provided on the upper end of the case (110), and a lower waterproof layer may be provided on the lower end of the case (110). In addition, the upper end side, and the lower end side of the battery cell (100) may be fixed to the inner surface of the cell frame (210) through the waterproof layer (150), respectively.

In addition, the waterproof layer (150) may comprise a waterproof adhesive or a potting resin, and the potting resin may be any one of a silicone-based resin, a urethane-based resin, and an epoxy-based resin.

The case (110) according to the present example may be manufactured according to any one of the first example to the second example to be described below.

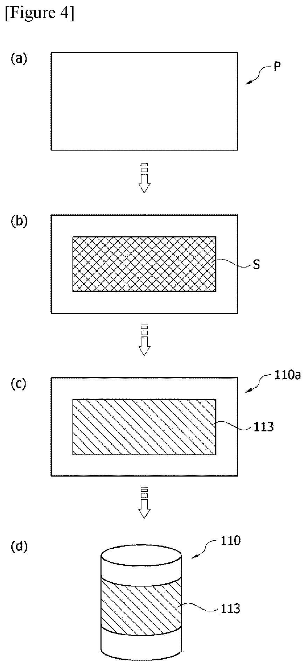

Figures 4 to 6 are diagrams for explaining a manufacturing method of a battery cell according to a first example of the present invention. Particularly, they are drawings for explaining a manufacturing method of a battery cell case.

The battery cell manufacturing method according to the first example comprises steps of scratching, in a unit plate material having a plating layer, a partial region of the plating layer to form a scratch region on the unit plate material, bonding a sacrificial metal sheet to one side of the unit plate material to cover the scratch region, and processing the unit plate material into a cylindrical shape so that the sacrificial metal sheet is exposed to the outside.

In addition, the manufacturing method of the battery cell may comprise a step of embedding an electrode assembly in the unit plate material processed into a cylindrical shape.

First, referring to Figures 4(a) and 6(a), a unit plate material (P1) having a plating layer (111a) is prepared. Here, the unit plate material (P1) means a metal plate material having a size that can be manufactured as the case (110). The unit plate material (P1) comprises a metal plate material (111b) and a plating layer (111a) provided on the metal plate material. The plating layer (111a) is provided by nickel-plating one side of the metal plate material (111b).

The nickel plating has little discoloration, excellent rust resistance, and excellent corrosion resistance and wear resistance. However, the plating layer (111a) may be an element that hinders the movement of electrons between the sacrificial metal sheet (113) and the unit plate material (P1).

To solve this problem, in the unit plate material (P1) having the plating layer (111a), a partial region of the plating layer (111a) is scratched. Accordingly, a scratch region (S) is provided on one side of the unit plate material (P1). Referring to Figure 6(b), the scratch region (S) is a region where the plating layer (111a) is damaged on one side of the unit plate material (P1).

Referring to Figure 4(b), the scratch region (S) is provided to be surrounded by the edge region (E) of the unit plate material (P1). The scratch region (S) may be formed as the plating layer (111a) of the unit plate material (P) is subjected to scratch treatment by a laser. Alternatively, the scratch region (S) may be formed as the plating layer (111a) of the plate material (P) is subjected to etching treatment. The etching treatment method is based on a chemical corrosion method. The edge region (E) is a region where the plating layer (111a) is not damaged.

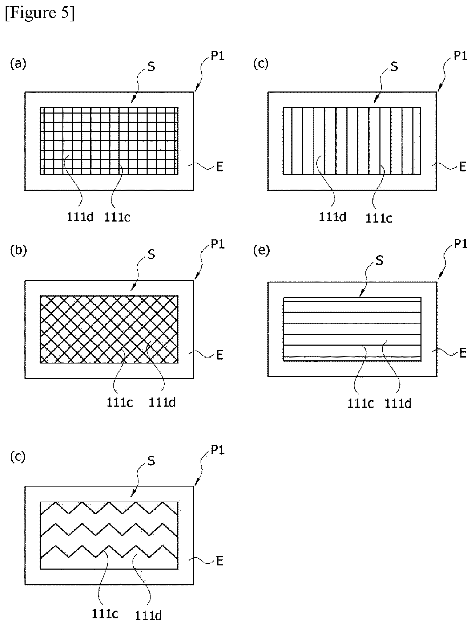

Referring to Figure 5, the scratch region (S) may be formed to have a predetermined scratch pattern line. For example, the scratch pattern line may be any one of a square grid pattern line (Figure 5(a)), an oblique grid pattern line (Figure 5(b)), a wavy pattern line (Figure 5(c)), a horizontal straight pattern line (Figure 5(e)), or a vertical straight pattern line (Figure 5(c)).

According to such a scratch pattern, the scratch region (S) may comprise a plurality of non-plated portions (111c) that a partial region of the plating layer (111a) is removed and a plated portion (111d) in which the plating layer remains between two adjacent non-plated portions (111c).

The scratch region (S) is provided to be surrounded by the edge region (E) of the unit plate. The edge region (E) is a region where the plating layer (111a) is not removed from one side of the unit plate material.

Referring to Figures 4(c) and 6(c), the sacrificial metal sheet (113) is laminated on one side of the unit plate material (P1) to cover the scratch region (S). The sacrificial metal sheet (113) is bonded face to face to the unit plate material (P1) by being pressure-welded to the edge region (E) and the plated portion (111d) in the scratch region (S).

The sacrificial metal sheet (113) may be a metal sheet having a larger area than the scratch region (S). In addition, the sacrificial metal sheet (113) may be a metal sheet having a thickness thinner than the thickness of the unit plate material (P1).

The sacrificial metal sheet (113) has a metal material having a higher metal ionization tendency than that of the unit plate material (P1). For example, the sacrificial metal sheet (113) may be formed of one or more selected from the group consisting of aluminum, magnesium, zinc, an aluminum alloy, a magnesium alloy, and a zinc alloy.

The sacrificial metal sheet (113) is bonded to the unit plate material (P1) by a pressure welding method. As the pressure welding method, any one of a hot pressure welding method, a cold pressure welding method, and a gas pressure welding method may be used.

As one example, the hot pressure welding method is a method that as a welding member applies pressure and heat to the sacrificial metal sheet (113), the sacrificial metal sheet (113) is pressure-welded to the unit plate material (P1).

As another example, the cold pressure welding method is a method that as a welding member pressurizes the sacrificial metal sheet (113) at room temperature, the sacrificial metal sheet (113) is pressure-welded to the unit plate material (P1) while being plastically deformed.

As another example, the gas pressure welding method is a method that pressure welding is performed by heating a welding member with a gas flame to raise the temperature to a recrystallization temperature or higher, and applying a pressure in an axial direction thereto.

In the scratch region (S) and the edge region (E), the sacrificial metal sheet (113) may be pressure-welded to the unit plate material (P1) at the portions in contact with the plating layer, the bonding points of the unit plate material (P1) may be evenly distributed over the entire area of the sacrificial metal sheet, and the bonding force of the sacrificial metal sheet (113) to the unit plate material (P1) may be improved.

By bonding the sacrificial metal sheet (113) to one side of the unit plate material (P1), it is possible to manufacture a case plate material (Figure 3(c), 110a). Referring to Figure 4(d), the case plate material (110a) is processed into a cylindrical shape so that the sacrificial metal sheet (113) is exposed to the outside. Accordingly, the case (110) of the battery cell (100) provided with the sacrificial metal sheet (113) on the outer surface is manufactured. As one example, the sacrificial metal sheet (113) may be provided on the outer surface of the case (110) in a band shape along the circumference of the case (110).

In the present example, as the sacrificial metal sheet (113) is bonded face to face to the unit plate material (P1) by a pressure welding method, it is possible to improve the bonding force between the sacrificial metal sheet (113) and the unit plate material (P1).

In the present invention, through the scratch region (S), it is possible to solve the obstacle of electron movement due to the plating layer (111a), which has been pointed out as the problem above. In addition, smooth movement of electrons between the sacrificial metal sheet (113) and the unit plate material (P1) can be promoted, and accordingly the sacrificial metal sheet (113) can be electrically and stably connected to the unit plate material (P1).

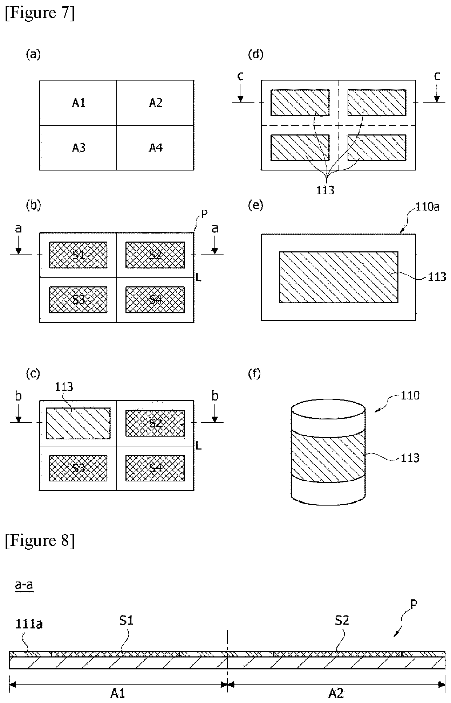

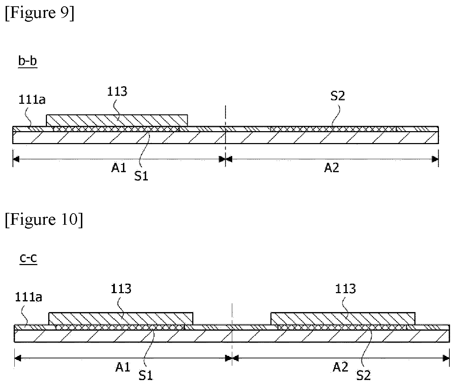

Figures 7 to 10 are diagrams for explaining a manufacturing method of a battery cell according to a second example of the present invention, which are particularly diagrams for explaining a manufacturing method of a battery cell case. Figure 8 is a cross-sectional diagram taken along line a-a in Figure 7, Figure 9 is a cross-sectional diagram taken along line b-b in Figure 7, and Figure 10 is a cross-sectional diagram taken along line c-c in Figure 7.

The battery cell manufacturing method according to the second example comprises, in respective unit regions (A1 to A4) of a plate material (P) having a plurality of unit regions on the same plane, a first step in which a plurality of scratch regions (S) is provided by scratching a plating layer (111a) of the plate material (P), a second step in which a sacrificial metal sheet (113) is laminated and bonded to one side of the plate material (P) to cover the scratch regions (S), a third step in which the plate material (P) is cut for each unit region (A1 to A4), thereby being manufactured into a plurality of case-type plate materials (110a), and a fourth step in which the case plate material (110a) is processed into a cylindrical shape so that the sacrificial metal sheet (113) is exposed to the outside.

Referring to Figure 7(a), a plate material (P) capable of being partitioned into a plurality of unit regions on the same plane is prepared. The plate material (P) is provided with a plating layer (111a) on one side.

Each unit region has a size that can be manufactured as the case (110). In the present example, for convenience of description, the plurality of unit regions will be referred to as a first unit region (A1) to a fourth unit region (A4).

In the present example, for convenience of description, the plate material (P) has been partitioned into four unit regions, but this is merely an example, and the number of unit regions may be changed according to the size of the plate material (P).

Referring to Figures 7(b) and 8, a plurality of scratch regions (S) is provided on one side of the plate material (P). The scratch region (S) is a region provided as the plating layer (111a) of the plate material (P) is subjected to scratch treatment. As the scratch method of the plating layer (111a), a laser method or a chemical method may be used as in the above-described first example.

In the second example, the scratch region (S) is provided for each unit region (A1 to A4). The scratch regions (S) of the respective unit regions (A1 to A4) will be referred to as a first scratch region (S1) to a fourth scratch region (S4).

Here, the first scratch region (S1) is a region where the plating layer (11 1a) is damaged in the first unit region (A1), and the second scratch region (S2) is a region where the plating layer (111a) is damaged in the second unit region (A2).

In addition, the third scratch region (S3) is a region where the plating layer (111a) is damaged in the third unit region (A3), and the fourth scratch region (S4) is a region where the plating layer (111a) is damaged in the fourth unit region (A4).

The first scratch region (S1) to the fourth scratch region (S4) are provided on the same plane of the plate material (P) and are disposed apart from each other.

Referring to Figures 7(c) and 7(d), each of the sacrificial metal sheets (113) is pressure-welded in each unit region (A1 to A4), whereby the sacrificial metal sheet (113) is bonded on one side of the plate material (P).

Referring to Figures 9 and 10, the sacrificial metal sheet (113) is laminated on one side of the plate material (P) to cover the scratch region (S).

As described above, the sacrificial metal sheet (113) has a metal material having a higher metal ionization tendency than that of the plate material (P). For example, the sacrificial metal sheet (113) may be formed of one or more selected from the group consisting of aluminum, magnesium, zinc, an aluminum alloy, a magnesium alloy, and a zinc alloy.

The sacrificial metal sheet (113) is bonded to the plate material (P) by a pressure welding method. As the pressure welding method, any one of a hot pressure welding method, a cold pressure welding method, and a gas pressure welding method may be used.

As one example, the hot pressure welding method is a method that as a welding member applies pressure and heat to the sacrificial metal sheet (113), the sacrificial metal sheet (113) is pressure-welded to the plate material (P). As another example, the cold pressure welding method is a method that as a welding member pressurizes the sacrificial metal sheet (113) at room temperature, the sacrificial metal sheet (113) is pressure-welded to the plate material (P) while being plastically deformed. As another example, the gas pressure welding method is a method that pressure welding is performed by heating a welding member with a gas flame to raise the temperature to a recrystallization temperature or higher, and applying a pressure in an axial direction thereto.

When the sacrificial metal sheet (113) is bonded to one side of the plate material (P) through the above-described processes, the plate material (P) is cut for each unit region along a cutting line (L in Figure 7). In the present example, the plate material (P) cut for each unit region (A1 to A4) is referred to as a case plate material (110a).

Referring to Figure 7(f), the case plate material (110a) is processed into a cylindrical shape so that the sacrificial metal sheet (113) is exposed to the outside. Accordingly, the case (110) provided with the sacrificial metal sheet (113) on the outer surface is manufactured.

One example of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a battery cell in accordance with one example of the present invention, a manufacturing method thereof, and a direct water-cooling battery module comprising the same, the corrosion resistance of the battery cell can be improved by using a sacrificial metal having a higher metal ionization tendency than that of the case of the battery cell.

## Claims

1. A battery cell manufacturing method comprising steps of:
scratching, in a unit plate material having a plating layer, a partial region of the plating layer to form a scratch region on the unit plate material;
bonding a sacrificial metal sheet to one side of the unit plate material to cover the scratch region; and
processing the unit plate material into a cylindrical shape so that the sacrificial metal sheet is exposed to the outside.

2. The battery cell manufacturing method according to claim 1, wherein
the scratch region comprises a plurality of non-plated portions that a partial region of the plating layer is removed from the unit plate material and a plated portion in which the plating layer remains between two adjacent non-plated portions.

3. The battery cell manufacturing method according to claim 2, wherein
the sacrificial metal sheet is bonded to the unit plate material by being pressure-welded with the plated portion within the scratch region and the plating layer outside the scratch region.

4. The battery cell manufacturing method according to claim 3, wherein
the sacrificial metal sheet is pressure-welded to the unit plate material in a state of surface contact therewith.

5. The battery cell manufacturing method according to claim 4, wherein
the sacrificial metal sheet is pressure-welded to the unit plate material by a hot pressure welding method.

6. The battery cell manufacturing method according to claim 4, wherein
the sacrificial metal sheet is pressure-welded to the unit plate material by a gas pressure welding method.

7. The battery cell manufacturing method according to claim 11, wherein
the sacrificial metal sheet is pressure-welded to the unit plate material by a cold pressure welding method.

8. The battery cell manufacturing method according to claim 1, wherein
the scratch region is provided as the plating layer is subjected to scratch treatment by a laser.

9. The battery cell manufacturing method according to claim 1, wherein
the scratch region is provided as the plating layer is subjected to etching treatment.

10. The battery cell manufacturing method according to claim 1, wherein
the sacrificial metal sheet is formed of a metal material having a higher metal ionization tendency than that of the unit plate material.

11. The battery cell manufacturing method according to claim 1, wherein
the sacrificial metal sheet is formed of one or more selected from the group consisting of aluminum, magnesium, zinc, an aluminum alloy, a magnesium alloy, and a zinc alloy.

12. A battery cell comprising:
an electrode assembly;
a case accommodating the electrode assembly;
a plating layer formed on an outer surface of the case;
a scratch region formed by removing a partial region of the plating layer; and
a sacrificial metal sheet provided to surround the scratch region and formed of a material having a higher metal ionization tendency than that of the plating layer, wherein
the scratch region comprises a plurality of non-plated portions that a partial region of the plating layer is removed and a plated portion in which the plating layer remains between two adjacent non-plated portions.

13. The battery cell according to claim 12, wherein
the sacrificial metal sheet is bonded to the outer surface of the case by being pressure-welded with the plated portion within the scratch region and the plating layer outside the scratch region.

14. The battery cell according to claim 12, wherein
the plating layer is a nickel-plating layer, and
the sacrificial metal sheet is formed of one or more selected from the group consisting of aluminum, magnesium, zinc, an aluminum alloy, a magnesium alloy, and a zinc alloy.

15. A battery module comprising:
the plurality of battery cells according to claim 12;
a cell frame provided so that the plurality of battery cells is disposed apart from each other, and cooling water allows to flow between the plurality of battery cells; and
a cooling water supply part for supplying cooling water into the cell frame, wherein
the cooling water supply part is provided to supply cooling water without insulating treatment.
